# EUROPEAN PATENT APPLICATION

(11) **EP 0 677 261 A1**
(43) Date of publication of application: **18.10.1995**
(21) Application number: 94111749.1
(22) Date of filing: 28.07.1994
(51) Int. Cl.: A47C 7/46

(54) **Corrective inflatable lumbar cushion**

(30) Priority: 15.03.1994 IT UP940037
(71) Applicant: LEDRAPLASTIC S.p.A., I-33010 Osoppo (Ud) (IT)
(72) Inventor: Cosani, Nevio, I-33100 Udine (IT)
(74) Representative: Petraz, Gilberto Luigi

(57) **Abstract**

Corrective inflatable lumbar cushion (10) which is suitable for use in association with a seatback (19) of an armchair or chair or motor vehicle seat (20) and comprises a hollow body (11) having a substantially parallelepipedal form and consisting of a resilient plastic material and including valve means (12) for inflation/ deflation, the hollow body (11) having two supporting surfaces (13) that cooperate with the back of a user and with the seatback (19) of the motor vehicle seat (20), chair or armchair respectively.

## Description

This invention concerns a corrective inflatable lumbar cushion, as set forth in the main claim.

The corrective inflatable lumbar cushion is applied advantageously to the seatback of seats and in particular of office chairs, armchairs and motor vehicle seats and cooperates with the back and especially, but not only, with the lumbar region of a user so as to make the form of the seatback suitable for the back of the user and thus improve his posture and the working efficiency of his position.

Corrective lumbar cushions are known which are fitted to the seat back of armchairs to help the user to keep his back in the right position and to re-produce the natural curvature of the spine.

These corrective lumbar cushions generally comprise an inner body made of a soft deformable material and consisting, for instance, of a shaped block of foam rubber which is embellished with a covering fabric.

These corrective lumbar cushions have a determined shape which has been designed to suit the physique of a standard person.

These cushions possess only partly the best shape to suit the back of a user and therefore meet only partly the requirements of various users.

Moreover, these corrective lumbar cushions, as they have a substantially stationary shape, cannot vary their thicknesses so as to be adapted to the particular seatback of a seat, chair or armchair to which they are fitted.

Furthermore, the surface of these corrective lumbar cushions against which the back of the user is supported is substantially smooth and thus prevents natural aeration of a user's back.

The present applicants have designed, tested and embodied this invention to overcome the shortcomings of the state of the art and to achieve further advantages.

This invention is set forth and characterised in the main claim, while the dependent claims describe variants of the idea of the main embodiment.

The purpose of this invention is to provide a corrective cushion which can adapt itself to the shape of the particular seatback with which it is associated so as to meet the various requirements of users as well as possible.

The corrective lumbar cushion according to the invention is economical and practical to use and has a modest overall bulk when not in use.

The corrective lumbar cushion according to the invention can also be used as an inflatable cushion to support the head, for instance on the beach or in a camp site.

The corrective lumbar cushion according to the invention is of an inflatable type and enables its thickness and stiffness to be modified to suit a user's requirements by merely inflating or deflating it by the desired quantity.

The corrective lumbar cushion according to the invention can float and therefore can be used also in the sea or in a swimming pool without any problems.

The corrective inflatable lumbar cushion according to the invention comprises a hollow body made of a resilient plastic material and equipped with a valve for its inflation and deflation.

Moreover, the corrective inflatable lumbar cushion according to the invention is hygienically safe since its supporting surfaces can be readily washed.

Furthermore, the corrective inflatable lumbar cushion according to the invention is an insulating cushion since it is made of a plastic material.

The corrective inflatable lumbar cushion according to the invention has an elongate shape with a length substantially between 20 and 40 cms., but advantageously between 25 and 35 cms., a width of about 10-15 cms. and an outer thickness between 2 and 5 cms. at least at its central zone.

The supporting surface of the corrective lumbar cushion according to the invention has a substantially rectangular shape.

According to a variant the supporting surface of the corrective lumbar cushion according to the invention has an oval or accentuated oval shape.

The corrective lumbar cushion according to the invention has along the short side of its supporting surface a cross-section which is substantially rectangular with the corners bevelled.

According to a variant the cross-section along the short side of its supporting surface is substantially oval.

The corrective cushion according to the invention has along the long side of its supporting surface a cross-section which is substantially rectangular with the corners bevelled.

According to a variant this section has at its sides bulges which cooperate with a lower central zone to create a concave area.

According to a further variant this section includes a bulge at its centre.

In a first form of embodiment the corrective cushion according to the invention has both its supporting surfaces completely smooth.

According to a variant at least one supporting surface includes bulges suitably distributed over at least part of its surface so as to provide a light massaging of the back of the user and to make possible better aeration of the part of the user's back in contact with the corrective cushion.

The corrective inflatable lumbar cushion according to the invention includes also anchorage means on its short sides or on its narrow long sides; fixture and supporting cords or belts cooperate with these anchorage means. These cords or belts enable the corrective lumbar cushion to be positioned and secured in the right desired position against the seatback of the chair, armchair or motor vehicle seat to which the cushion is fitted.

A fastener or buckle is associated advantageously with the fixture and supporting cord or belt to clamp the cord or belt at the desired length when the corrective lumbar cushion has been fitted to the seatback.

According to an advantageous form of embodiment the cords or belts are resilient so as to ensure a more efficient fixture of the corrective lumbar cushion in the right position.

According to a variant the corrective lumbar cushion according to the invention may be covered with an embellishing fabric.

The attached figures are given as a non-restrictive example and show some preferred embodiments of the invention as follows:-
- Fig.1: gives a three-dimensional view of a corrective inflatable lumbar cushion according to the invention in association with the seatback of a motor vehicle seat;
- Figs.2a, 2b and 2c: show front views of three possible forms of embodiment of the corrective inflatable lumbar cushion according to the invention;
- Figs.3a to 3d: show cross-sections of the short side of four possible forms of embodiment of the corrective inflatable lumbar cushion according to the invention.

The reference number 10 in the attached figures denotes generally a corrective inflatable lumbar cushion according to the invention.

The corrective inflatable lumbar cushion 10 according to the invention comprises a hollow body 11 having a substantially parallelepipedal shape and consisting of a resilient plastic material, for instance such as rubber or an analogous material.

The hollow body 11 includes an inflating/deflating valve 12, through which it is possible to increase or decrease the quantity of air in the body 11, thereby varying the thickness and stiffness of the hollow body 11.

The hollow body 11 has two two supporting surfaces 13, which cooperate respectively with the back of the user and with a seatback 19 of a motor vehicle seat 20 or chair or armchair to which the corrective inflatable lumbar cushion 10 is fitted.

According to an advantageous form of embodiment the supporting surfaces 13 are substantially rectangular (Fig.2a).

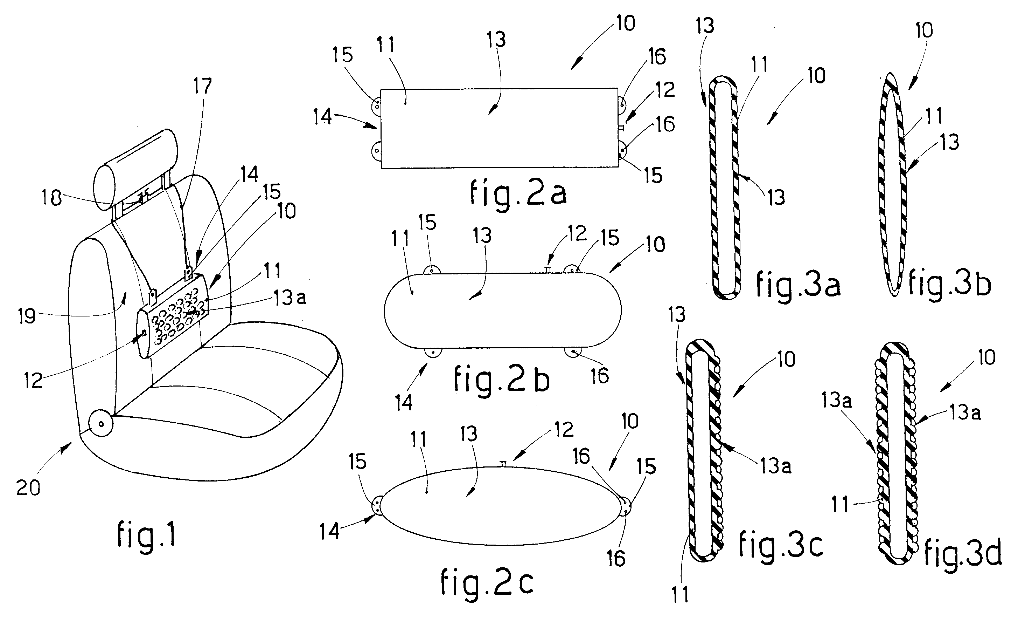

According to a first variant shown in Fig.2b the supporting surfaces 13 are substantially oval, whereas according to another variant shown in Fig.2c the supporting surfaces 13 have an elliptic shape.

The corrective inflatable lumbar cushion 10 according to the invention may have along its short side a cross-section which is substantially rectangular with rounded corners (Fig.3a) or elliptic (Fig.3b).

The corrective inflatable lumbar cushion 10 according to the invention has along the long side of its supporting surface 13 a substantially rectangular cross-section with bevelled corners (Fig.1).

According to a variant which is not shown here, this section has at its sides bulges which cooperate with a lower central zone to create a concave area.

According to a further variant this section includes a bulge at its centre.

According to a preferred form of embodiment at least one supporting surface 13 of the corrective inflatable lumbar cushion 10 consists at least partly of bulges 13a to enhance aeration and to carry out a light beneficial massage on part of the back of the person being supported.

The hollow body 11 includes anchorage means 14 consisting in this case of fins 15 arranged on opposite sides of the hollow body 11; each fin 15 contains at least one through hole 15 with which a fixture and supporting cord or belt 17 cooperates.

According to a first form of embodiment the fins 15 extend lengthwise (Figs.2a and 2c), whereas they are arranged transversely in the form of embodiment of Fig.2b.

The fins 15 may be positioned singly (Fig.2c) or in pairs (Figs.1, 2a and 2b).

The fixture and supporting cords or belts 17 in the corrective inflatable lumbar cushion 10 according to the invention shown in Fig.1 comprise a fastener or buckle 18 to clamp the cords or belts 17 at the right length.

According to a variant the cords or belts 17 are of a resilient type.

## Claims

1. Corrective inflatable lumbar cushion (10) which is suitable for use in association with a seatback (19) of an armchair or chair or motor vehicle seat (20) and is characterised in that it comprises a hollow body (11) having a substantially parallelepipedal form and consisting of a resilient plastic material and including valve means (12) for inflation/deflation, the hollow body (11) having two supporting surfaces (13) that cooperate with the back of a user and with the seatback (19) of the motor vehicle seat (20), chair or armchair respectively.

2. Corrective cushion (10) as in Claim 1, in which the supporting surfaces (13) are substantially rectangular (Fig.2a).

3. Corrective cushion (10) as in Claim 1, in which the supporting surfaces (13) are substantially ovoidal (Fig.2b) or elliptic (Fig.2c).

4. Corrective cushion (10) as in any claim hereinbefore, in which the cross-section along the short side of the supporting surface (13) is substantially rectangular (Fig.3a).

5. Corrective cushion (10) as in any of Claims 1 to 3 inclusive, in which the cross-section along the short side of the supporting surface (13) is substantially elliptic (Fig.3b).

6. Corrective cushion (10) as in any claim hereinbefore, in which the cross-section along the long side of the supporting surface (13) is substantially rectangular.

7. Corrective cushion (10) as in any of Claims 1 to 5 inclusive, in which the cross-section along the long side of the supporting surface (13) includes at its sides bulges which cooperate with a lower central zone to form a concave area.

8. Corrective cushion (10) as in any of Claims 1 to 5 inclusive, in which the cross-section along the long side of the supporting surface (13) includes a central bulge.

9. Corrective cushion (10) as in any claim hereinbefore, in which at least one supporting surface (13) bulges at least partly (13a).

10. Corrective cushion (10) as in any claim hereinbefore, which comprises fixture means (14) including at least one pair of fins (15), each fin (15) containing at least one through hole (16) with which a fixture and supporting cord or belt (17) cooperates.

11. Corrective cushion (10) as in Claim 10, in which the fixture and supporting cord or belt (17) is of a resilient type.

12. Corrective cushion (10) as in Claim 10 or 11, in which the fixture and supporting cord or belt (17) cooperates with a fastener or buckle (18).
